# EUROPÄISCHE PATENTSCHRIFT

(11) **EP 0 929 754 B1**
(45) Veröffentlichungstag und Bekanntmachung des Hinweises auf die Patenterteilung: **16.05.2001**
(21) Anmeldenummer: 97912173.8
(22) Anmeldetag: 13.10.1997
(51) Int. Cl.: F16D 55/22

(54) **SCHEIBENBREMSE FÜR FAHRZEUGE UND VERFAHREN ZU DEREN HERSTELLUNG**
DISK BRAKE FOR VEHICLES AND METHOD FOR THE MANUFACTURE THEREOF
FREIN A DISQUE POUR VEHICULES ET PROCEDE PERMETTANT DE LE PRODUIRE

(30) Priorität: 14.10.1996 DE 19642384
(43) Veröffentlichungstag der Anmeldung: 21.07.1999
(73) Patentinhaber: KNORR-BREMSE Systeme für Nutzfahrzeuge GmbH, 80809 München (DE)
(72) Erfinder: KÜHNE, Viktor, D-86720 Nördlingen (DE); BAUMGARTNER, Hans, D-85368 Moosburg (DE); BIEKER, Dieter, D-83080 Oberaudorf (DE)
(86) Internationale Anmeldenummer: EP9705622
(87) Internationale Veröffentlichungsnummer: WO9816756

(56) Entgegenhaltungen:
- DE-A- 1 811 666
- DE-A- 1 911 746
- FR-A- 2 227 458
- FR-A- 2 238 865
- FR-A- 2 350 502
- US-A- 3 490 565
- US-A- 4 072 214

## Beschreibung

Die Erfindung betrifft eine Scheibenbremse für Fahrzeuge nach dem Oberbegriff des Anspruchs 1 und ein Verfahren zu deren Herstellung.

Die in der DE PS 37 16 202 offenbarte Scheibenbremse wird pneumatisch betätigt und eignet sich daher vor allem für den Einsatz im Nutzfahrzeugbereich, wo sie sich auch in der Praxis gut bewährt hat. Als Kraftübertragungseinrichtung zum Übertragen der Zuspannkraft auf die Bremsbacke auf der anderen Seite der Bremsscheibe wird ein Gußsattel verwendet.

Aus der FR -A-2 350 502 ist es bekannt, einen PKW-Bremsscheibensattel rahmenartig auszubilden.

Aus der US-A-4072214 ist eine Scheibenbremse nach dem Oberbegriff des Anspruches 1 bekannt, die nach Art eines geschlossenen Rahmens ausgebildet ist, welcher die Zuspanneinrichtung sowie beide Bremsbacken zumindest im wesentlichen umgibt, wobei funktionswesentliche Elemente der Zuspanneinheit in einer Ausnehmung eines Modulkörpers angeordnet sind. Wünschenswert ist gegenüber diesem Stand der Techik eine konstruktive Vereinfachung der Scheibenbremse. Die Erfindung zielt darauf ab, dieses Problem bzw. diese Aufgabe zu lösen.

Die Erfindung erreicht dieses Ziel durch den Gegenstand des Anspruches 1 also dadurch, daß der Rahmen zumindest teilweise eine Wickelstruktur aufweist. Vorzugsweise ist der Rahmen (z.B. mit einem optionalen Modulkörper) als Verbundteil ausgeführt, welches zumindest im Bereich des Kraftflusses zwischen Betätigungsseite und Reaktionsseite der Scheibenbremse die Wickelstruktur aufweist.

Gegenüber dem gattungsgemäßen Stand der Technik hat diese Scheibenbremse sowohl eine höhere Strukturfestigkeit als auch ein deutlich geringeres Gewicht.

Im Vergleich zu den bekannten Gußsätteln aus Eisenwerkstoffen mit hoher Festigkeit hat die erfindungsgemäße Konstruktion ferner den besonderen Vorteil, daß der Rahmen aufgrund seiner besonders einfachen Ausgestaltung und Geometrie keine komplexen und überlagerten Spannungszustände aus Zug-/Druck- und Biegespannungen aufnehmen muß. Die Wickelstruktur überträgt ausschließlich die entstehenden Reaktionskräfte zwischen Zuspannseite und Reaktionsseite, wobei sie durch ihre Wickelstruktur auch weniger rißanfällig als der gattungsgemäße Stand der Technik ist. Ferner ist aufgrund der Wickelstruktur (bei geeigneter Materialwahl) ein Rahmen mit besonders kleinem Querschnitt realisierbar ist, was wiederum das Gewicht der Bremse und die Herstellkosten senkt.

Besonders bevorzugt ist ein ein- oder mehrteilige Modulkörper mit Ausnehmungen zur Aufnahme funktionswesentlicher Elemente der Zuspanneinrichtung vorgesehen, wobei die Wickelstruktur als Wickelrahmen ausgebildet ist, der sowohl den Modulkörper als auch die beiden Bremsbacken umgibt. Der Modul- oder Grundkörper ist derart ausgestaltet, daß er alle Funktionen des Bremssattels (mit Ausnahme der vollständigen Lastaufnahme) erfüllt.

Zweckmäßig besteht die Wickelstruktur aus einem hochfesten Material, dessen Elastizitätsmodul (deutlich) kleiner ist als das Elastizitätsmodul des Wickelrahmens. Der besondere Vorteil eines Verstärkungswickels mit hoher Materialfestigkeit liegt darin, daß sein Querschnitt so klein dimensionierbar ist, daß er ohne Beeinträchtigung sonstiger Funktionen des Bremssattels genau im Kraftfluß des Sattelrahmens angeordnet ist. Damit erfolgt die Übertragung der Reaktionskräfte fast ausschließlich im Verstärkungswickel in Form von Zugspannungen und der Grundkörper wird nur noch geringen Belastungen ausgesetzt. Auf diese Weise ist es wiederum auch möglich, daß der Grundkörper aus Leichtmetallen wie Aluminium gegossen und weniger stabil als beim Stand der Technik ausgelegt wird, was erneut das Gewicht der Scheibenbremse sowie auch deren Herstellkosten senkt. Nach einer weiteren Variante der Erfindung ist es schließlich sogar möglich, den Modulkörper abschnittsweise federnd nachgiebig auszubilden.

Nach weiteren besonders bevorzugten Varianten der Erfindung weist der Modulkörper ferner offene Nuten oder geschlossene Durchgangskanäle auf, welche zur vollständigen oder teilweisen Aufnahme der Wickelstruktur ausgelegt sind. Die Nuten vereinfachen die Fertigung der Scheibenbremsen beachtlich, da es lediglich notwendig ist, den vorgefertigten Wickelrahmen bei der Montage der Bremse in diese Nuten einzulegen. Alternativ ist es auch möglich, daß der Wickelrahmen in den Leichtmetallguß des Modulkörpers mit eingegossen wird. In diesem Fall umgibt der Rahmen zwar noch die wesentlichen Abschnitte der Zuspanneinrichtung, es wird jedoch ein Verbundteil mit besonders hoher Zuverlässigkeit im Dauerbetrieb geschaffen.

Nach einem weiteren Anspruch wird ein einfaches Verfahren zur Herstellung der erfindungsgemäßen Scheibenbremsen geschaffen, das sich dadurch auszeichnet, daß die Kraftübertragungseinrichtung als geschlossener Rahmen aus einer (z.B. Kunststoff)-Faser gewickelt wird.

Zwar hat es im Bereich hydraulisch betätigter Scheibenbremsen für PKW bereits Versuche gegeben, den Bremssattel zu vereinfachen oder gar einzusparen, allerdings sind die dort gewählten Lösungen nicht auf Nutzfahrzeugdimensionen übertragbar. So zeigt z.B. die DE OS 42 36 683 eine Schwimmsattel-Teilbelagscheibenbremse, bei welcher zur Erzielung eines niedrigen Gewichtes und niedriger Herstellkosten der Schwimmsattel aus zwei axial beabstandeten Teilen gebildet wird, die durch Streben aus hochfestem Material miteinander verbunden sind, welche sich über die Bremsscheibe erstrecken und den Abstand zwischen den Sattelteilen überwinden.

Die dargestellte Scheibenbremse ist als Hydraulikbremse ausgebildet und aufgrund ihrer mechanischen Ausbildung nur für den Einsatz in PKW geeignet. Eine ähnliche Lösung zeigt die DE OS 27 42 319, bei der ein U-förmiger Bügel an seiner offenen Seite an einer Spannvorrichtung befestigt ist. In keiner dieser Schriften wurde jedoch erkannt, daß es besonders vorteilhaft, ist, wenn die Einrichtung zur Übertragung und Aufnahme der Bremsreaktionskräfte quasi die "ganze" Bremse ringsum umschließt. Zusätzliche Verbindungsstellen zu anderen Elementen wie Bremsträger usw., die stets auch eine mögliche Fehlerquelle sein können, entfallen.

Aus der EP 0108 680 ist eine hydraulisch betätigte Scheibenbremse bekannt, deren Sattel in Leichtbauweise als Blechrahmen gefertigt ist. Es handelt sich aber immer noch um einen vollständigen Bremssattel, der lediglich aufgrund seines Einsatzzweckes für leichte PKW eine einfache und damit billige Bauform aufweist. Auf Nutzfahrzeuge läßt sich diese Konstruktion nicht übertragen, da die auftretenden Bremskräfte extrem viel größer als bei PKW sind. Man würde vielmehr wieder bei einem massiven Gußsattel landen, wenn man versuchen würde, ausgehend von der Konstruktion der EP 0 108 680 eine auch für schwere Nutzfahrzeuge geeignete Scheibenbremse zu realisieren.

Um dennoch die Vorteile eines kostengünstigen Rahmens auch für Nutzfahrzeuge nutzen zu können, wird nach einer Weiterbildung der Erfindung der Bremssattel anders als bei den vorstehend genannten leichten Hydraulikbremsen, welche den Bremssattel lediglich entsprechend der zu bewältigenden Bremskräfte als Billigsattel realisieren, in zwei Komponenten aufgeteilt: den Rahmen und den Modulkörper. Der Modulkörper nimmt die Zuspanneinrichtung (bzw. deren funktionswesentlichen Teile) sowie bevorzugt auch die Lagerung des Bremsträgers auf. Der Modulköper ist dabei bevorzugt derart beschaffen und geometrisch so bemessen, daß der Rahmen nur noch zur Übertragung von Zugkräften dient und auf eine minimale konstruktive Bauform beschränkt werden kann (z.B. umlaufendes Band). Die übrige Eigensteifigkeit der Bremse wird im wesentlichen durch den Modulkörper realisiert.

In den Modulkörper ist die gesamte Zuspannmechanik integrierbar (und ggf. die Führungseinrichtung relativ zum Bremsträger, die der konventionellen "Bremssattelführung" entspricht). Der Modulkörper - bevorzugt als Druckgußteil ausgebildet und/oder aus Leichtmetall bestehend - weist dazu Aussparungen/Öffnungen auf, in welche die gesamte Zuspannmechanik einsetzbar ist. Dies ermöglicht in besonders vorteilhafter Weise eine Art Vormontage des "Bremsenkernes", d.h. von Zuspannmechanik nebst Nachsteller sowie Bremsträgerführung, wobei die derart vormontierte Einheit lediglich noch in den umgebenden Rahmen zu setzen ist. Auf diese Weise werden die Herstellkosten weiter verringert. Aus dem Zusammenspiel von Modulkörper und Rahmen ergibt sich eine vollwertige Bremssattelfunktion bzw. ein vollständiger Ersatz eines Gußsattels durch zwei besonders leichtbauende und kostengünstige Elemente.

Da das Modul als Druckgußteil ausführbar ist, ergibt sich nur noch wenig - und damit eine kostengünstige - zerspanende Bearbeitung. Druckguß ist einsetzbar, da alle Zuspannkräfte nur in Form von Druckspannungen angreifen. Die Moduleinheit ist wiederum im Vergleich mit konventionellen Scheibenbremsen für Nutzfahrzeuge mit Gußsattel besonders leicht. Ferner ergibt sich mit der Erfindung eine Baukastenlösung, denn den verschiedenen Einbaubedingungen wird einfach durch Modifikation des Rahmens Rechnung getragen, wobei das Modul in der Regel unverändert bleibt. Gegenüber herkömmlichen Gußkonstruktionen ergeben sich zudem Einbauvorteile, da hochfeste Materialien im Vergleich zu Guß verwendet werden können, die auch leichter bauen.

Konstruktiv und aus Gründen einer gleichmäßig verteilten Kraftübertragung ist es ferner von besonderem Vorteil, wenn der Rahmen und der Modulkörper derart ausgebildet sind, daß eine flächige Abstützung des Modulkörpers in Bremsmomentrichtung - d.h. auf der von der Bremsscheibe abgewandten Seite des Modulkörpers - erfolgt. Das Modul nimmt die Zuspannkräfte damit großflächig auf. Dies läßt sich ferner dadurch begünstigen, daß der Rahmen bandartig ausgebildet ist (bei einer Nutzfahrzeugbremse ist das Band z.B. ca. 5 cm breit). Das Band besteht vorzugsweise aus umgeformten Stahlblechen, die fest miteinander verschweißt und/oder vernietet sind. Das derart hergestellte, kostengünstige Band ist auch härtesten Dauerbelastungen sicher gewachsen und kann besonders einfach ausgelegt werden, wenn es mit Mitteln zur Versteifung des Rahmens versehen ist (z.B. "Zug"-Streben).

Nach einer weiteren besonders bevorzugten Variante der Erfindung durchgreift wenigstens ein Teil der Verstrebungen Aussparungen der Moduleinheit, so daß die Moduleinheit auf einfache Weise gegen Ausfallen gesichert und unkompliziert montierbar ist. Zusätzlich verleihen die Streben dem Rahmen Steifigkeit. Dabei umfaßt der Rahmen in sicherer Form sowohl den Modulkörper als auch beide Bremsbeläge sowie den oberen Abschnitt des Bremsträgers. Ggf. ist zwischen den Rahmen und den Bremsbelag bzw. die Bremsbacke auf der dem Modulkörper gegenüberliegenden Seite der Bremsscheibe innen ein Stabilisierungselement eingesetzt.

Zusammengefaßt ergibt sich mit Hilfe der Erfindung eine aufgrund niedrigen Materialbedarfs und unkomplizierter Montage äußerst preisgünstig herstellbare Scheibenbremse, die auch für den Dauer- und Großserieneinsatz in schweren Nutzfahrzeugen geeignet ist.

Nachfolgend wird die Erfindung anhand eines Ausführungsbeispiels unter Bezug auf die Zeichnung näher beschrieben. Es zeigt:
- Fig. 1: einen ersten Schnitt durch eine Scheibenbremse mit Blechrahmenbauweise.
- Fig. 2: einen weiteren Schnitt durch die Scheibenbremse der Fig. 1; und
- Fig. 3 bis 7: verschiedene Ansichten eines Ausführungsbeispiels der Erfindung.

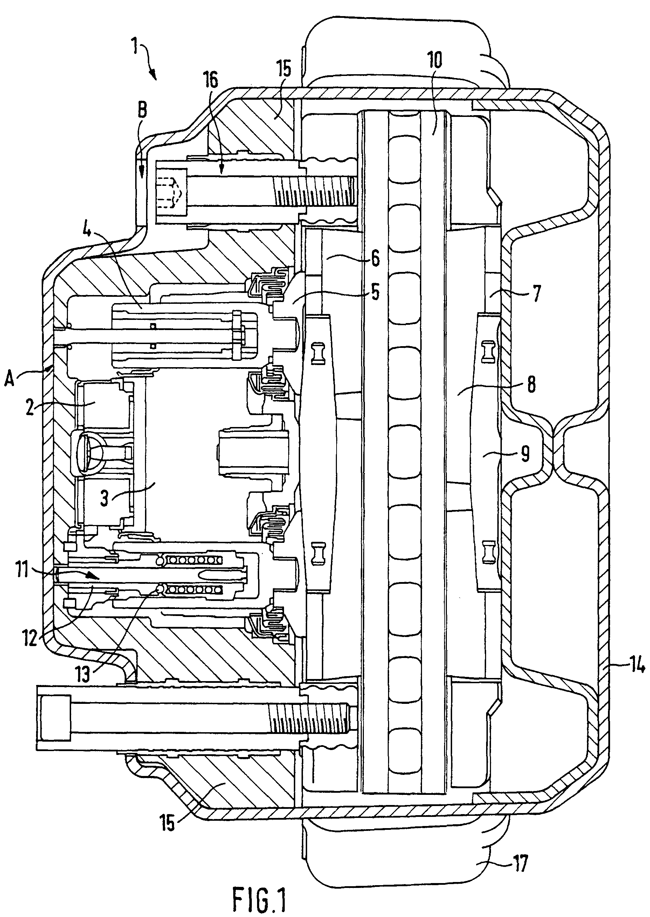

Die in Fig. 1 gezeigte Scheibenbremse 1 ist als pneumatisch betätigte Scheibenbremse für Nutzfahrzeuge ausgebildet. Bei der Betätigung eines (hier nicht dargestellten) Bremszylinders wird durch die (ebenfalls nicht dargestellte) Kolbenstange des Zylinders ein exzentrisch rollengelagerter Hebel 2 betätigt. Die eingeleitete Kraft wird über die Brücke 3 und integrierte Gewindesspindeln 4 mit Stempeln 5 auf eine Bremsbacke 6 (mit - vorzugsweise zweischichtigem - Belagträger 7, Belagmaterial 8 und Antiklapperfeder 9) mit einer Kraft F1 übertragen. Dabei stützt sich die Bremsbacke 6 an der Bremsscheibe 10 ab.

Bevor die Übertragung der Bremskraft auf die andere Seite der Bremsscheibe erläutert wird, sei kurz die Funktion der Verschleißnachstellung dargestellt. Ein automatischer Verschleißnachsteller (Nachstelleinrichtung) befindet sich in einer der beiden, miteinander über eine (hier nicht dargestellte) Kette oder eine analoge Einrichtung verbundenen, rohrförmigen Gewindespindeln 4. Bei jeder Bremsbetätigung wird vom Hebel 2 über eine Schaltgabel (hier nicht dargestellt) die Nachstelleinrichtung 11 betätigt. Die Nachstelleinrichtung 11 weist eine Innenhülse 12 auf, welche durch die Drehung der Schaltgabel mitgedreht wird. Die Drehbewegung wird über eine Kugelrampe 13 auf die Gewindespindel 5 übertragen. Bei korrektem Lüftspiel erfolgt keine Nachstellung.

Zur Übertragung der Bremskraft auf die andere Seite der Bremsscheibe 10 bzw. die Bremsbacke 6' dient anstelle der sonst üblichen Bremssattel-Gußkonstruktion eine Kraftübertragungseinrichtung 14, die nach Art eines ringsum geschlossenen Rahmens 14 ausgebildet ist, welcher die Zuspannkräfte vollständig aufnimmt. Der Rahmen 14 umschließt sowohl einen Modulkörper 15, als auch beide Bremsbacken 6 und 6' und den oberen Abschnitt des Bremsträgers 17.

In den einteiligen, als Druckgußteil ausgebildeten, Modulkörper 15 ist eine Führungseinrichtung 16 integriert, welche der herkömmlichen "Bremssattelführung" entspricht. Ferner ist in entprechend ausgebildete Ausnehmungen des Modulkörpers 15 die gesamte Zuspanneinrichtung bzw. -mechanik (Teile 2 bis 5) nebst Nachstellung (11 - 13) vormontierbar integriert.

Der bandartige Rahmen 14 und der Modulkörper 15 sind derart ausgebildet, daß eine flächige Abstützung des Modulkörpers in Bremsmomentrichtung - d.h. in der von der Bremsscheibe abgewandten Seite des Modulkörpers; siehe Pfeil A - erfolgt. Im Bereich B ist der bandartige Rahmen 14 fest verschweißt und vernietet.

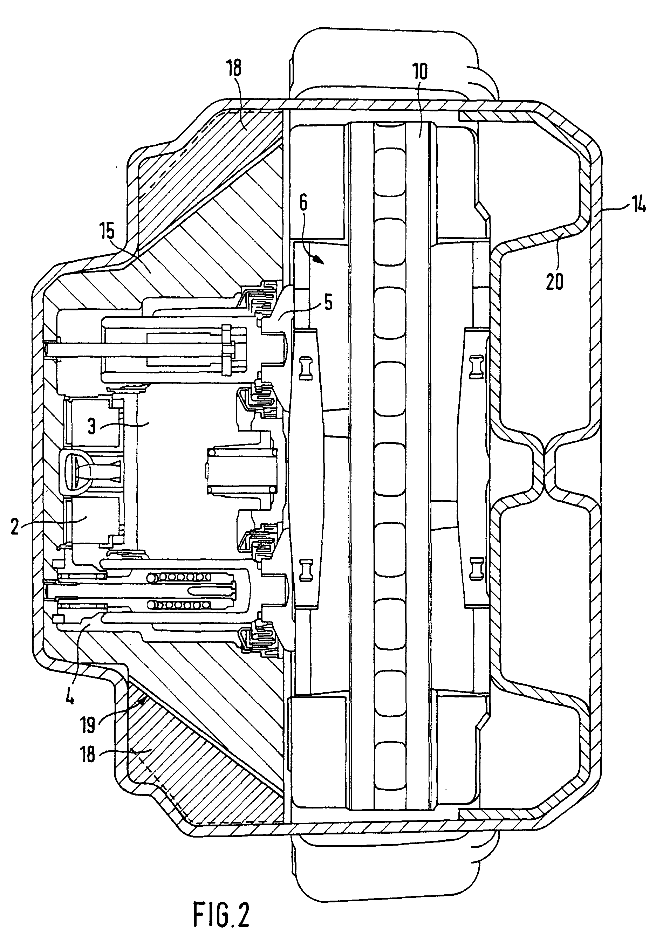

Wie aus Fig. 2 zu erkennen, ist der Rahmen 14 mit strebenartigen Mitteln 18 versehen, die dem Rahmen 14 zusätzliche Steifigkeit verleihen. Die Verstrebungen 18 durchgreifen wiederum Aussparungen 19 der Moduleinheit 15, so daß auch der Sitz der Moduleinheit 15 auf einfache Weise definiert ist. Zwischen den Rahmen 14 und die Bremsbacke 6' auf der dem Modulkörper 15 gegenüberliegenden Seite der Bremsscheibe 10 ist ferner ein Stabilisierungelement 20 (hier ein Stahlgerüst) eingesetzt. Durch Variation der Geometrie dieses Elementes ist die Bremse auf einfachste Weise unterschiedlichsten Einbaugegebenheiten anpaßbar.

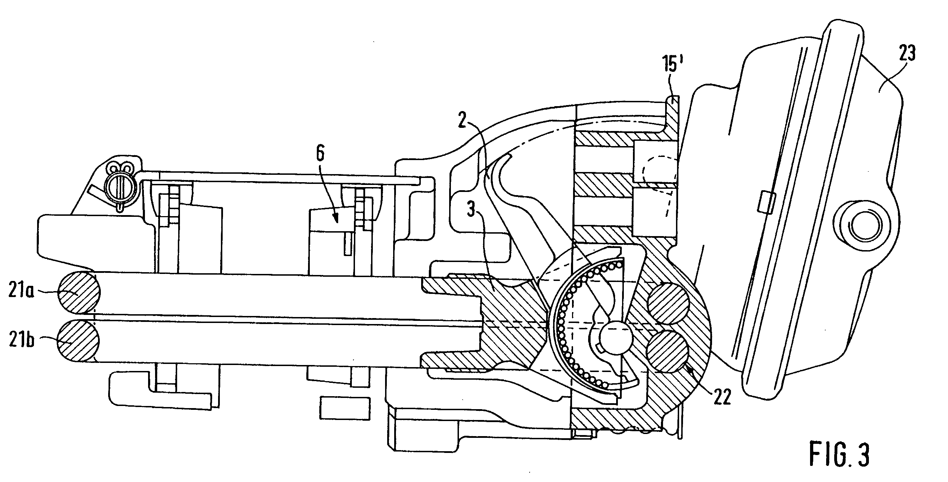

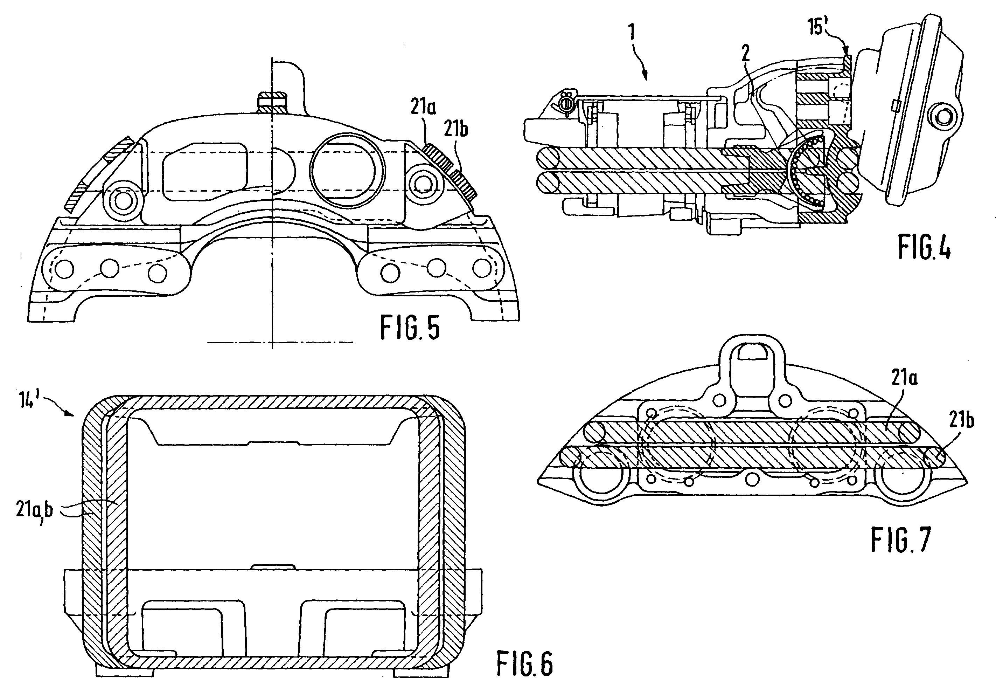

Ein Ausführungsbeispiel der Erfindung ist in den Fig. 3 bis 7 abgebildet. Bei diesem Ausführungsbeispiel wird anstelle eines bandartigen Rahmes ein Wickelrahmen 14' eingesetzt. Der Wickelrahmen 14' weist zwei Wickelstränge 21a und b auf, welche direkt nebeneinander liegen und "kabelartig" aus Kohlefasern gewickelt sind. Die Fasern sind dabei im wesentlichen in Richtung des Kraftflusses ausgerichtet. Die derart gebildete Struktur ist hochfest und gegen Rißbildung weitgehend unempfindlich. Der Wickelrahmen 14' hat - wie in der Draufsicht der Fig. 6 zu erkennen - eine rechteckige und damit extrem einfach zu realisierende Geometrie. Die Stränge 21 haben einen kreisförmigen Querschnitt und sind nur im Bereich der abgerundeten Ecken des Rechteckes abgeflacht, was eine Folge der jeweils nötigen 90°-Umlenkungen des Wickelrahmens ist. Der Wickelrahmen 14' durchgreift auf der Zuspannseite Durchgangskanäle 22 eines modifizierten Modulkörpers 15'. Der vorgefertigte Wickelrahmen wird dazu beim Giessen des Modulkörpers 14 in die Gußform für den Modulkörper 15' eingelegt und mit diesem vergossen, so daß sich ein Verbundkörper ausbildet. Auch bei diesem Ausführungsbeispiel der Erfindung wird wiederum bei der Betätigung des Bremszylinders 23 über eine Kolbenstange (nicht dargestellt) ein exzentrisch rollengelagerter Hebel 2 betätigt. Die eingeleitete Kraft wird als Reaktionskraft über die Brücke 3 und integrierte Gewindesspindeln (hier nicht dargestellt) auf eine Bremsbacke 6 mit einer Kraft F1 übertragen. Dabei stützt sich die Bremsbacke 6 an der Bremsscheibe (nicht eingezeichnet) ab. Zur Übertragung der Bremskraft auf die andere Seite der Bremsscheibe bzw. die Bremsbacke 6' dient der Wickelrahmen 14', welcher die Zuspannkräfte auch hier vollständig aufnimmt.

### Bezugszeichen

- Scheibenbremse: 1
- Hebel: 2
- Brücke: 3
- Gewindesspindeln: 4
- Stempel: 5
- Bremsbacke: 6
- Belagträger: 7
- Belagmaterial: 8
- Antiklapperfeder: 9
- Bremsscheibe: 10
- Nachstelleinrichtung: 11
- Innenhülse: 12
- Kugelrampe: 13
- Rahmen: 14
- Modulkörper: 15
- Führungseinrichtung: 16
- Bremsträger: 17
- Streben: 18
- Aussparungen: 19
- Stabilisierungelement: 20
- Wickelstränge: 21a, b
- Durchgangskanäle: 22
- Bremszylinder: 23

## Patentansprüche

1. Scheibenbremse (1) für Fahrzeuge, vorzugsweise druckluftbetätigte Nutzfahrzeug-Scheibenbremse, mit
a) beidseits einer Bremsscheibe (10) angeordneten Bremsbacken (6, 6') mit Bremsbelägen (8),
b) einer Zuspanneinrichtung zum Zuspannen einer der Bremsbacken (6), und
c) einer Kraftübertragungseinrichtung zum Übertragen der Zuspannkraft auf die Bremsbacke (6') auf der anderen Seite der Bremsscheibe (10),
d) wobei die Kraftübertragungseinrichtung nach Art eines geschlossenen Rahmens (14') ausgebildet ist, welche die Zuspanneinrichtung sowie beide Bremsbacken (6) zumindest im wesentlichen umgibt,
**dadurch gekennzeichnet, daß**
e) der Rahmen zumindest teilweise eine Wickelstruktur aufweist.

2. Scheibenbremse nach Anspruch 1, **dadurch gekennzeichnet, daß** der Rahmen (14') zumindest im Bereich des Kraftflusses zwischen Betätigungsseite und Reaktionsseite die Wickelstruktur aufweist.

3. Scheibenbremse nach Anspruch 1 oder 2, **dadurch gekennzeichnet, daß** die Wickelstruktur aus einem hochfesten Stahl(draht) oder aus einem hochfesten Faserverbund oder Kohlefaser besteht.

4. Scheibenbremse nach einem der vorstehenden Ansprüche, **dadurch gekennzeichnet, daß** ein- oder mehrteiliger Modulkörper (15) mit Ausnehmungen zur Aufnahme funktionswesentlicher Elemente der Zuspanneinrichtung vorgesehen ist.

5. Scheibenbremse nach Anspruch 4, **dadurch gekennzeichnet, daß** die Wickelstruktur als geschlossener Wickelrahmen (14') sowohl den Modulkörper (15') als auch die beiden Bremsbacken (6, 6') einfaßt.

6. Scheibenbremse nach Anspruch 4 oder 5, **dadurch gekennzeichnet, daß** der Modulkörper (15') aus einem Material besteht, dessen Elastizitätsmodul kleiner ist als das Elastizitätsmodul des Wickelrahmens (14').

7. Scheibenbremse nach einem der Ansprüche 4-6, **dadurch gekennzeichnet, daß** der Modulkörper (15') abschnittsweise federnd nachgiebig ausgebildet ist.

8. Scheibenbremse nach einem der Ansprüche 4-7, **dadurch gekennzeichnet, daß** der Modulkörper (15') aus Aluminium besteht.

9. Scheibenbremse nach einem der Ansprüche 4-8, **dadurch gekennzeichnet, daß** der Modulkörper (15') offene Nuten oder geschlossene Durchgangskanäle (22) aufweist, welche zur vollständigen oder teilweisen Aufnahme des Wickelrahmens (14') ausgelegt sind.

10. Scheibenbremse nach einem der Ansprüche 4-9, **dadurch gekennzeichnet, daß** der Wickelrahmen (14') als vorgefertigtes Element ausgebildet ist, welches an den Modulkörper (15') montierbar ist.

11. Scheibenbremse nach einem der Ansprüche 4-10, **dadurch gekennzeichnet, daß** der Wickelrahmen (14') in den Leichtmetallguß des Modulkörpers (15') eingegossen ist.

12. Scheibenbremse nach einem der vorstehenden Ansprüche, **dadurch gekennzeichnet, daß** der Wickelrahmen (14') eine rechteckige Form hat und aus zwei separaten, nebeneinanderliegenden Wickelsträngen (21a, 22a) besteht.

13. Verfahren zur Herstellung einer der Scheibenbremsen nach einem der vorstehenden Ansprüche, **dadurch gekennzeichnet, daß** die Kraftübertragungseinrichtung nach Art eines geschlossenen Rahmens aus einer Faser gewickelt wird.

## Claims

1. Disc brake (1) for vehicles, preferably a pneumatically operated commercial-vehicle disc brake, having
a) brake pads (6, 6') which are arranged on both sides of a brake disc (1) and have brake linings (8),
b) a brake-application device for applying one of the brake pads (6), and
c) a force-transmission device for transmitting the brake-application force to the brake pad (6') on the other side of the brake disc (10),
d) with the force-transmission device being formed in the manner of a closed frame (14') that at least substantially surrounds the brake-application device and also both brake pads (6),
characterised in that
e) the frame has, at least in part, a wound structure.

2. Disc brake according to claim 1, characterised in that the frame (14') has the wound structure at least in the region of the flow of force between the actuating side and the reaction side.

3. Disc brake according to claim 1 or 2,
characterised in that the wound structure is made of a high-strength steel (wire) or a high-strength fibre composite or carbon fibre.

4. Disc brake according to one of the preceding claims, characterised in that a one-part or multi-part module body (15) is provided that has recesses to receive elements of the brake-application device that are important for its function.

5. Disc brake according to claim 4, characterised in that the wound structure, as a closed wound frame (14'), encloses both the module body (15') and the two brake pads (6, 6').

6. Disc brake according to claim 4 or 5,
characterised in that the module body (15') is made of a material, the modulus of elasticity of which is less than the modulus of elasticity of the wound frame (14').

7. Disc brake according to one of claims 4 - 6,
characterised in that the module body (15') is formed so as to be resiliently flexible in sections.

8. Disc brake according to one of claims 4 - 7,
characterised in that the module body (15') is made of aluminium.

9. Disc brake according to one of claims 4 - 8,
characterised in that the module body (15') has open grooves or closed through-channels (22) which are designed to receive the wound frame (14') in full or in part.

10. Disc brake according to one of claims 4 - 9,
characterised in that the wound frame (14') is in the form of a prefabricated element that can be mounted on the module body (15').

11. Disc brake according to one of claims 4 - 10,
characterised in that the wound frame (14') is cast in the cast light metal of the module body (15').

12. Disc brake according to one of the preceding claims, characterised in that the wound frame (14') has a rectangular form and consists of two separate, adjacent wound strands (21a, 22a [21b]).

13. Method for producing one of the disc brakes according to one of the preceding claims, characterised in that the force-transmission device is wound out of a fibre in the manner of a closed frame.

## Revendications

1. Frein (1) à disque pour véhicule automobile, de préférence frein à disque pour véhicule automobile utilitaire actionné par voie pneumatique, comprenant
a) des mâchoires (6, 6') de frein disposées de part et d'autre d'un disque (10) de frein et ayant des garnitures (8) de frein,
b) un dispositif d'application pour appliquer l'une des mâchoires (6) de frein, et
c) un dispositif de transmission de force pour transmettre la force d'application à la mâchoire (6') de frein de l'autre côté du disque (10) de frein,
d) le dispositif de transmission de force étant constitué à la façon d'un cadre (14') fermé, qui entoure au moins pour l'essentiel le dispositif d'application ainsi que les deux mâchoires (6) de frein,
caractérisé en ce que,
e) le cadre comporte au moins partiellement une structure enroulée.

2. Frein à disque suivant la revendication 1, caractérisé en ce que le cadre (14') comporte la structure enroulée, au moins dans la partie du flux de force comprise entre le côté d'actionnement et le côté de réaction.

3. Frein à disque suivant la revendication 1 ou 2, caractérisé en ce que la structure enroulée est constituée d'un acier (en fil) très résistant ou d'un composite fibreux très résistant ou de fibres de carbone.

4. Frein à disque suivant l'une des revendications précédentes,
caractérisé en ce qu'il est prévu un corps (15) modulaire en une partie ou en plusieurs parties, ayant des évidements de réception d'éléments essentiels au fonctionnement du dispositif d'application.

5. Frein à disque suivant la revendication 4, caractérisé en ce que la structure enroulée entoure en tant que cadre (14') enroulé et fermé, tant le corps (15') modulaire que les deux mâchoires (6, 6') de frein.

6. Frein à disque suivant la revendication 4 ou 5, caractérisé en ce que le corps (15') modulaire est en un matériau dont le module d'élasticité E est plus petit que le module d'élasticité du cadre (14') enroulé.

7. Frein à disque suivant l'une des revendications 4 à 6,
caractérisé en ce que le corps (15') modulaire est constitué de manière à céder élastiquement par partie.

8. Frein à disque suivant l'une des revendications 4 à 7,
caractérisé en ce que le corps (15') modulaire est en aluminium.

9. Frein à disque suivant l'une des revendications 4 à 8,
caractérisé en ce que le corps (15') modulaire comporte des gorges ouvertes ou des canaux (22) fermés de passage, qui sont conçus pour recevoir entièrement ou partiellement le cadre (14') enroulé.

10. Frein à disque suivant l'une des revendications 4 à 9,
caractérisé en ce que le cadre (14') enroulé est constitué sous la forme d'un élément préfabriqué, qui peut être monté sur le corps (15') modulaire.

11. Frein à disque suivant l'une des revendications 4 à 10,
caractérisé en ce que le cadre (14') enroulé est coulé dans la pièce coulée en métal léger constituant le corps (15') modulaire.

12. Frein à disque suivant l'une des revendications précédentes,
caractérisé en ce que le cadre (14') enroulé, a une forme rectangulaire et est constitué de deux cordons (21a, 22a) enroulés distincts côte à côte.

13. Procédé de fabrication de l'un des freins (10) suivant l'une des revendications précédentes, caractérisé en ce que le dispositif de transmission de force est enroulé à la façon d'un cadre fermé en une fibre.
